# EUROPEAN PATENT SPECIFICATION

(11) **EP 4 062 981 B1**
(45) Date of publication and mention of the grant of the patent: **30.10.2024**
(21) Application number: 21189025.6
(22) Date of filing: 02.08.2021
(51) Int. Cl.: A63B 29/02, A44B 11/00, A62B 35/00, F16G 11/10

(54) **ROPE HOLDER APPARATUS AND METHOD FOR USE IN SPORT CLIMBING**
SEILHALTEVORRICHTUNG UND VERFAHREN ZUR VERWENDUNG BEIM SPORTKLETTERN
APPAREIL ET PROCÉDÉ DE SUPPORT DE CORDE À UTILISER EN ESCALADE SPORTIVE

(30) Priority: 26.03.2021 US 202163166275 P
(43) Date of publication of application: 28.09.2022
(73) Proprietor: Baumgartner Scholz, Günther Horst, 1204 San Antonio de los Altos (VE); Baumgartner Guillén, Walter Rafael, 1204 San Antonio de los Altos (VE)
(72) Inventor: Baumgartner Scholz, Günther Horst, 1204 San Antonio de los Altos (VE); Baumgartner Guillén, Walter Rafael, 1204 San Antonio de los Altos (VE)
(74) Representative: González López-Menchero, Álvaro Luis

(56) References cited:
- ES-T3- 2 609 670
- GB-A- 2 416 386
- GB-A- 2 481 849
- US-A1- 2009 188 753

## Description

### FIELD OF THE INVENTION

The present invention generally relates to devices for handling and using ropes in sport climbing, and more specifically, to a rope holder apparatus for use in sport climbing.

### BACKGROUND OF THE INVENTION

In the sport and art of rope and sport climbing, there is nothing as important to the climber as the rope. While several devices are known in the art that are used to secure the climber, or other elements, to the rope, there are currently no devices that the climber can utilize in order to hold the rope, or sections of it, without the use of his hands during the climb. There exists a need in the art for a device that enables the climber to hold the rope, or a section of it, momentarily during the climb.

Different types of climbing generally require the climber to utilize different and specialized equipment, not only for safety, but also to aid in the mechanics of the climb itself. In general, climbing can be divided into top-rope climbing, and sport, or lead, climbing. Unlike top-rope climbing, in which a rope secured from the ground is pre-attached to an anchor point at the top and then is returned down to hold the climber, in sport and lead climbing techniques the rope ascends with the climber. The climber carries the rope, which is tied to a security harness at waist level. As the climber ascends, the climber attaches the rope to fixed anchor points on the wall (protections or quickdraws). In the event of a fall after having ascended between two anchor points and before securing the next higher anchor, the free fall will be at least twice the distance from the climber to the last secured anchor. For example: if the climber ascended two meters from the last anchor, the free fall will be 4 meters. To minimize the free fall distance in the event of a fall, the climber secures the rope to the anchor points as soon as the next higher anchor can be reached. This necessitates the climber to pull the rope up from waist level and raise it up to the level of the immediate upper anchor. This operation must be performed while the climber is holding himself or herself onto the wall. This leaves only one hand for this action, frequently forcing the climber to hold the rope with their teeth in cases where a single movement is not enough to take the length of rope necessary for him/her to reach the immediate higher anchor point. In these cases, holding the rope with the mouth is a necessary but dangerous action, not only because of the obvious lack of hygiene standards that this practice entails, but also because of the risk of serious injury in case of suffering a fall while holding the rope in the mouth. Frequent cases of tooth loss and other injuries from these incidents has been documented. There is currently no device on the market that assists the climber during this maneuver of holding the initially pulled rope while taking another section of it to reach a higher anchor point and avoiding the need to hold the rope in the mouth.

In the state of the art is known the document GB2481849, which discloses a cord clamp with a push button quick release, which is adapted to bind one or more flexible cords or strings by freely pulling said cord to the desired point of binding upon. The cord is clamped against retreating until the button is depressed upon which the cord is freely released.

It would, therefore, be desirable to have a device that eases and assists the climber in the handling of the rope during climbing. Such a device would be desirable to be fixed to the climber at a suitable height and location on his body that can hold the rope that the climber has picked up, allowing the climber to take another section with the only available hand. It would further be desirable if that device allowed for a quick and easy insertion and release of the rope from the device with the same upward movement that is performed to secure the rope to the upper anchor, thereby avoiding the risks involved in using the mouth to hold the rope.

### SUMMARY OF THE INVENTION

We disclose a device that eases and assists the climber in the handling of the rope during climbing, as claimed in claim 1. The additional features are defined by the dependent claims. This device may be afixed to the climber at a suitable height and location on the climber's body to hold the rope (or portion of rope) that the climber has picked up, allowing the climber to take another section of the rope with the only other available hand (presumably, one hand is supporting the climber. Furthermore, the device is adapted for a quick and easy insertion and release of the rope from the device with the same upward movement that is performed to secure the rope to an upper anchor, thereby avoiding the risks involved in using the mouth to hold the rope.

The main objective of the invention disclosed here is to provide a device that is afixed to the climber at a suitable height of his body and that said device holds the rope that the climber has picked up. This device is suitably configured to enable the climber to take another section of the rope with the only other available hand, while offering a quick and easy insertion and release of the rope from the device with the same upward movement to secure the rope to the upper anchor, avoiding the risks involved in using the mouth to hold the rope. This invention is not intended to serve as a safety device for the climber in the event of a fall, but rather as a tool that eases handling the rope during climbing.

A preferred embodiment of the device comprises a small, lightweight and easy-to-carry device that is adapted for the climber to wear afixed to the chest through a harness system and holds the rope, or sections of rope, without the use of the climber's hands or mouth. The placement of the rope in the device and its subsequent release is carried out simply and quickly, making movements that are natural to the climber.

In this preferred embodiment, the core components of the invention are a casing, a spring-loaded linkage assembly, and a toothed plate, which, generally speaking, are configured as follows: a casing having a slot configured to receive a rope includes a hollow interior portion; the toothed plate is disposed within the hollow interior portion of the casing and is pivotably attached to the casing by the spring-loaded linkage assembly.

The device is thus adapted to hold a rope oriented in the rope's axial direction within the slot of the casing and held in place by the action of the toothed plate applying a clamping force to the rope.

The casing, having a length, a width, and a height, where the length further includes a major axis, has a slot parallel to its major axis where the rope to be attached will be inserted. A mechanism of parallel rotating arms (the aforementioned linkage assembly) is attached to this casing on one end of the linkages, and on the other end the linkages are attached to the toothed plate. In the preferred embodiment, this linkage assembly is a planar four-bar linkage. This translates the plate in an angular movement relative to the arms, maintaining the toothed plate parallel to the slot without rotation. This plate is positioned parallel to the axial axis of the casing and of the rope to be held. When the rope is placed in the slot of the device, it comes into contact with the teeth of the plate and the axial displacement exerted by the weight of the rope pulls the toothed plate, forcing it to press the rope between the housing and the plate. This action is facilitated by the presence of a spring that helps the toothed plate to make good initial contact with the rope by maintaining a biasing force towards the rope and slot. The more traction or weight to hold, the greater the pressure exerted by the device. Movement of the rope in the opposite direction causes a displacement of the toothed plate away from the housing and allows easy release of the rope.

To avoid deterioration of the rope, especially in cases where a fall abruptly releases it from the device, embodiments of the invention may have the teeth of the plate to be made of plastic or other such sacrificial material, which would eventually wear and be replaced. In embodiments, the teeth may be an independent component and fixed to the plate through a fitting system, screws, or a combination of both, allowing easy replacement of the teeth in case of wear.

The invention was developed to be used in sport climbing, but its design allows it to be used in other applications. It could be used as a rope holder device with an easy and fast rope hold and release mechanism, in which the more weight is applied in the axial axis of the rope, the clamping force increases. Therefore, its uses could be extended, but not limited, to a rope handling system in the nautical field, a handheld rope pulling mechanism, a fixed rope holder in pulley mechanism (like the ones used for elevated storage systems of items), a wall fixed mechanism to hold items directly or by a piece of rope, a taut rope support in mooring or lashing systems, etc.

The construction and method of operation of the invention and additional objects and advantages of the invention is best understood from the following description of specific embodiments when read in connection with the accompanying drawings.

### BRIEF DESCRIPTION OF THE DRAWINGS

In the accompanying figures, like reference numerals refer to identical or functionally similar elements throughout the separate views. The accompanying figures, together with the detailed description below are incorporated in and form part of the specification and serve to further illustrate various embodiments and to explain various principles and advantages all in accordance with the present invention, in which:
FIG. 1 is an inferior view of the apparatus, according to an embodiment of the present invention;
FIG 2 is an inferior-frontal perspective view of the apparatus of FIG. 1;
FIG. 3 is an inferior perspective exploded view of the apparatus of FIG. 1;
FIG. 4 is a frontal perspective exploded view of the apparatus of FIG. 1;
FIG. 5 is a frontal view of the apparatus of FIG. 1, with the linkage and toothed plate assembly in a lowered state and with dashed lined indicating interior (hidden from view) features and components;
FIG. 6 is a frontal view of the apparatus of FIG. 1, with the linkage and toothed plate assembly in a raised state and with dashed lined indicating interior (hidden from view) features and components;
FIG. 7 is a rotated frontal view of the apparatus of FIG. 1, with the linkage and toothed plate assembly in a raised state, engaged with a rope (E) (shown for reference only),
and with dashed lined indicating interior (hidden from view) features and components;
FIG. 8 is an inferior view of the apparatus shown in FIG. 7;
FIG. 9 is a frontal-inferior perspective exploded view of a tooth and plate assembly according to an embodiment of the present invention;
FIG. 10 is a posterior exploded view of the assembly shown in FIG. 9;
FIG. 11 is a posterior-inferior perspective view of the apparatus shown in FIG. 1;
FIG. 12 is a frontal view of the apparatus shown in FIG. 1 attached to straps (F), according to an embodiment of the invention;
FIG. 13 is a frontal view of the invention, illustrating an alternate embodiment having torsion springs (G);
FIG. 14 is a composite frontal and perspective view of an example not covered by the claims; and
FIG. 15 is a composite frontal and perspective view of yet another example not covered by the claims.

### DETAILED DESCRIPTION

In this specification and in the appended claims and drawings, words and phrases have the meanings commonly attributed to them in the relevant art except as otherwise specified herein. The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein. Specifically, component names, types, and values, as depicted in the exemplary schematic diagrams, are not intended to limit the scope of the present invention and are presented only as possible embodiments.

The present invention is an apparatus, for holding a rope during climbing, in which the apparatus is made up of the following components: a casing and a gripping mechanism. These components are connected as follows: the casing has a body defining an interior portion, an exterior portion, and a slotted portion disposed through the casing, communicative between at least a part of the volume of the interior portion and the exterior portion; the gripping mechanism is disposed within the interior portion of the casing and is movable between a first state substantially within the volume defined by the slotted portion and a second state substantially outside of the volume defined by the slotted portion.

The present invention may also have one or more of each of the following (disjunctive list): a spring (or similar mechanical component) adapted to bias the gripping mechanism towards the first state; a gripping mechanism having a replaceable toothed portion; one or more slots or similar features disposed on the casing adapted to affix the apparatus to another structure (such as a harness); two or more rotating arms connecting the case with gripping a mechanism.

It should further be noted that a related system includes the previously described apparatus with the various components securely mounted onto a harness system, thereby enabling ease of access and use by the climber.

Furthermore, a method of using the apparatus and system includes the steps of: The straps attached to the apparatus by the slots arrangements in the case must be secured to the climbing harness. The strap coming from the bottom of the apparatus has a buckle clip. One part of the buckle clip is fixed to the strap under the apparatus and the other part of the buckle clip is attached to the end of the strap that must pass through the frontal tie loop of the climbing harness and then secured to the fixed part of the buckle clip. After secured the buckle clip, the length of the strap could be adjusted. From the top of the device, the straps must pass over the climber's shoulders and then secured to the security harness by a buckle clip system in which one part of the clip is fixed to the harness's haul loop or gear loop and the other part is attached to the device's strap. The length of the strap can also be adjusted at this point. This way the device stays in place at the height of the climber's chest.

Once the climber is in the wall and needs to hold the rope that has picked up for secure it in an upper anchor, the climber just needs to introduce the rope in the slot of the device with an upper movement. The displacement of the rope in the upper direction while introduced in the device makes the toothed plate to move away from casing, allowing and easy and effortless introduction of the rope. Once the rope is in the slot, the downward movement of the rope in its axis produced by its own weight forces the clamp mechanism, maintaining the rope in place. When the climber takes a portion of the rope below the device and move it with the natural upward movement to secure it in the higher anchor point in the wall, this upward movement of the rope releases it from the device without the need of further action from climber.

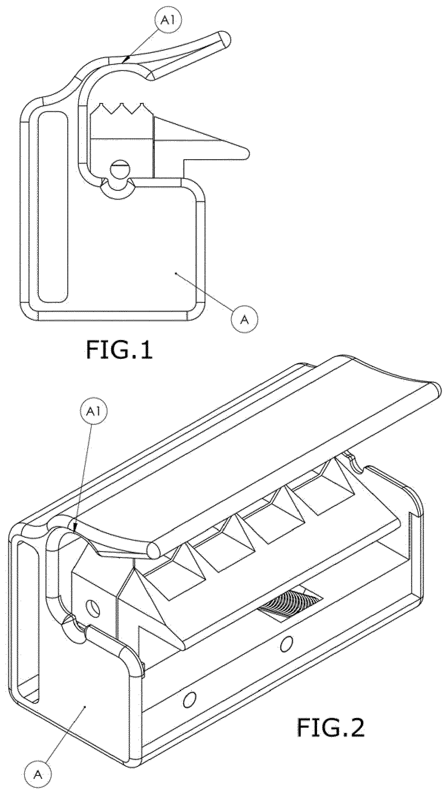

Referring now to the figures, in general, and to FIG. 1 in particular, we describe the exemplary embodiments of the present invention. The device for holding the rope (Figs 1, 2) consists of a casing A which has an opening parallel to its major axis with a concave profile A1, defining a slot where the rope to be held would be introduced.

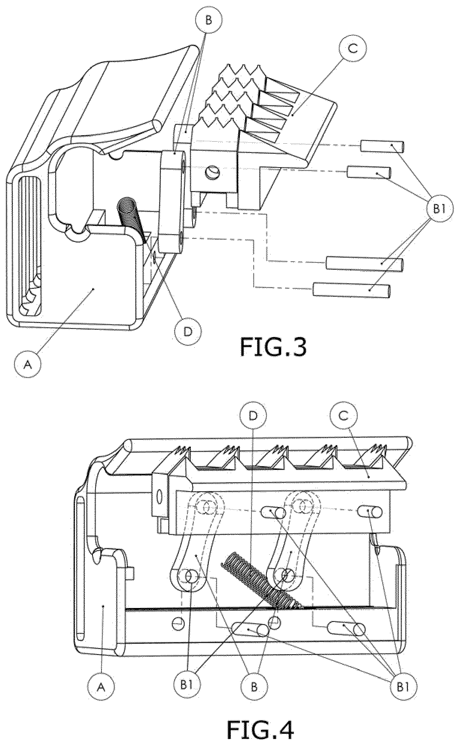

To this casing A (Figs 3, 4) is attached a mechanism of parallel rotating arms 8, secured through axes 81 to the casing at one end and to a toothed plate C at the other end. A normally extended spring *D* is located between the toothed plate *C* and the casing *A.* This spring *D* is configured to impart a biasing force on the mechanism 8 so as to bias the toothed plate C towards the slot defined by *A1.*

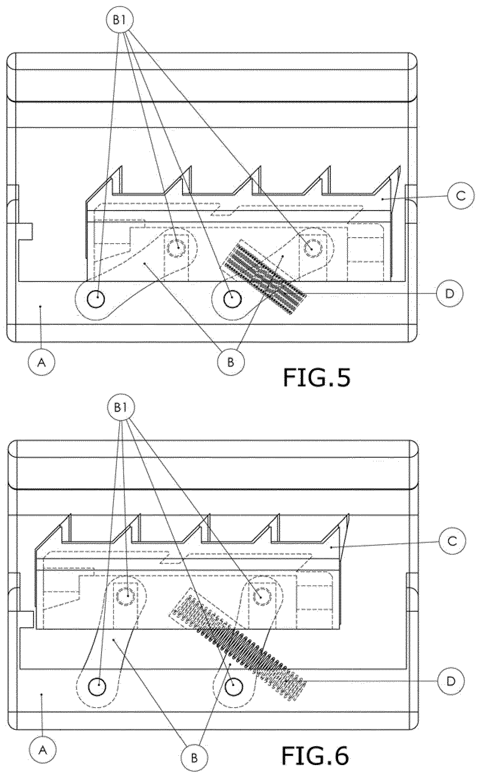

This arrangement of two parallel pivoting arms *B* fastened at one end to the casing *A* and at the other to the toothed plate *C*, provides this plate with an angular movement capacity relative to the arms, maintaining its plane without rotation relative to the casing (Figs 5, 6).

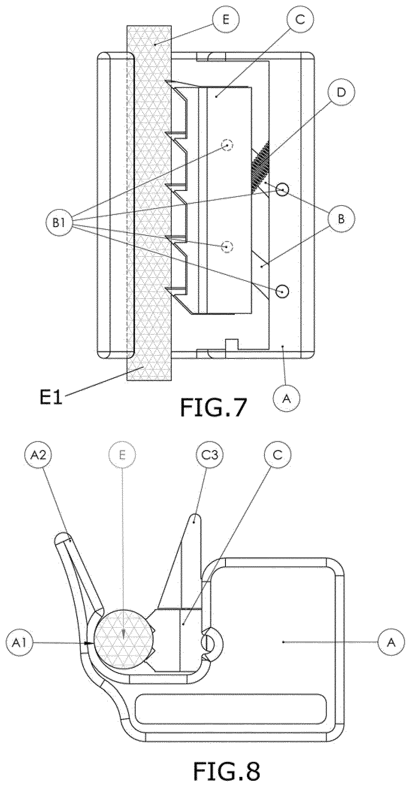

This plate C is positioned parallel to the axial axis of the casing and of the rope to be held. When placing the rope E in the slot of the device (Figs 7, 8), it comes into contact with the teeth of the plate C and the axial displacement applied by the weight of the rope (arrow E1) drags the toothed plate C, forcing it to press the rope E between the casing A and the plate C. This action is enhanced by the orientation of the teeth of the plate C and the presence of the spring D, that helps the toothed plate C make good initial contact with rope E. The more traction or weight to hold, the greater the pressure applied by the device. Movement of the rope E in the opposite direction causes a displacement of the toothed plate C away from the casing A and allowing easy release of the rope. To facilitate the introduction of the rope E, both the casing A and the toothed plate C will have divergent and ramp-shaped extensions A2 and C3 (Fig 8), which eases guiding the rope E.

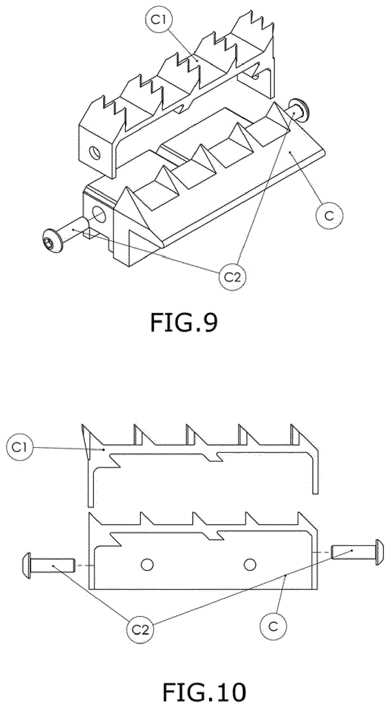

To avoid deterioration of the rope, especially in cases in which a fall abruptly releases it from the device, the teeth of the plate would be made of plastic material. The plastic could eventually wear, so the teeth *C1* (Figs 9, 10) may be in an independent piece and fixed to the plate *C* through a fitting system, *C2* screws or a combination of both, allowing easy replacement of the teeth in case of wear.

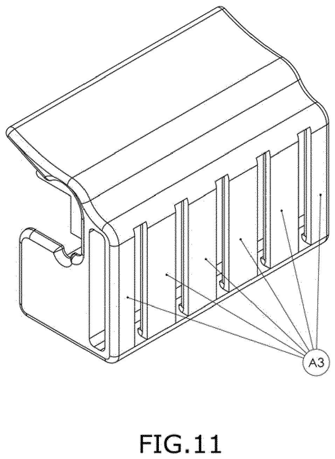

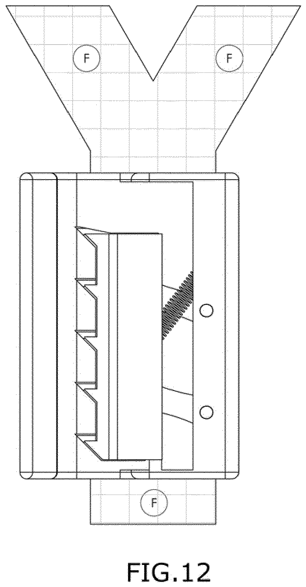

In the back of the casing *A* (Fig 11, 12) embodiments of the apparatus may include a system of slots *A3* through which straps *F* will be inserted and will keep the device fixed at the height of the climber's chest. These *F* straps could be attached from the bottom of the device directly to the front of the safety harness and from the top of the device to the back of the safety harness passing over the climber's shoulders.

All elements of the device can be made of plastic, metal or a combination of both materials.

The system of slots for fastening the straps can be integrated in the casing *A*, as represented in figure 11, or it can be an independent piece that will be fixed to the casing *A*.

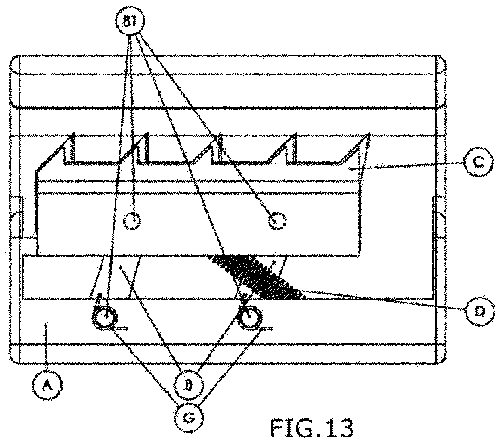

The spring *D* (Fig 13) can be replaced by a circular or torsion spring *G* placed between the housing *A* and the parallel arms B.

Toothed plate *C* and teeth *C1* (figs 9, 10) can be manufactured as a one piece.

Although it would make it a bit difficult to release the rope, the toothed plate *C* may have a concavity to fit the rope.

The number, size, shape and position of the teeth can vary or replaced by ridges or a rough or gripping surface. For example, when using metal teeth, these can be smaller and sharper, with similar performance, but causing greater deterioration of the ropes.

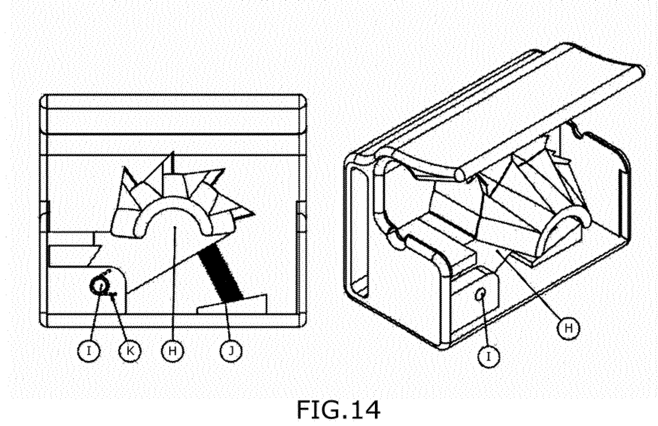

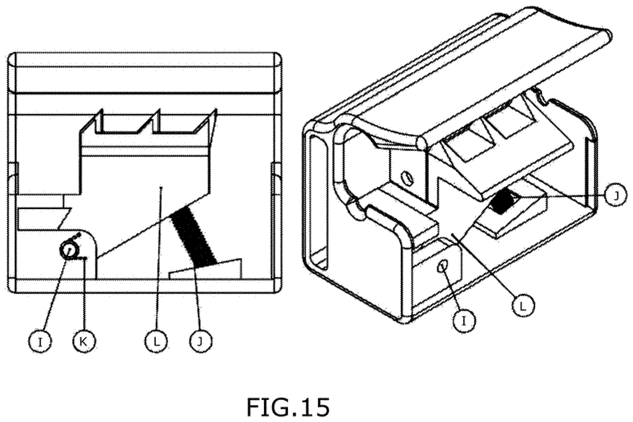

Although, in tests carried out with prototypes the toothed plate *C* and parallel arms *B* system was the most efficient and easy to use, alternative and non-limiting examples, which are not covered by the claims are contemplated and disclosed. In one example, a cam mechanism *H* (figs 14) with a single pivot point *I* and conventional spring J or circular torsional spring *K* on the pivot axis *I* can also be used. This cam system can be oval toothed or semi-circular toothed as in *H* (fig 14) or with flat toothed plate *L* (fig 15).

The teeth of the *H* and *L* cams (figs 14, 15) can be replaceable or integrated in a single piece with the cams.

The invention is defined by the appended claims.

## Claims

1. A rope holder apparatus comprising:
- a casing (A) which has an opening parallel to its major axis, said opening defining a slot having a concave profile (A1) configured to receive a rope and wherein the casing includes a hollow interior portion
- a A spring-loaded linkage assembly provided with a toothed plate (C), wherein both the toothed plate (C) and the spring-loaded linkage assembly is disposed within the hollow interior portion of the casing and the toothed plate (C) is pivotably attached to the casing by the spring-loaded linkage assembly,
wherein the apparatus is thus adapted to hold the rope (E) oriented in the rope's axial direction within the slot of the casing and held in place by the action of the toothed plate applying a clamping force to the rope, in such a way that, the more traction or weight to hold, the greater the pressure exerted by the apparatus,
the spring-loaded linkage assembly is a mechanism of parallel rotating arms (B) which translate the toothed plate (C) parallel to the slot without rotation, wherein the parallel rotating arms (B) are secured through axes (*B1*) to the casing (A) at one end and to a toothed plate (*C*) at the other end,
the spring-loaded linkage assembly comprises a normally extended spring (*D*) located between the toothed plate (C) and the casing *(A) wherein* this spring (*D)* is configured to impart a biasing force on the parallel rotating arms (*B)* so as to bias the toothed plate (*C)* towards the slot defined by the concave profile (*A1).*

2. A rope holder apparatus according to claim 1 **characterized in that** the parallel rotating arms (B) are four-bar linkage.

3. A rope holder apparatus according to claim 1 or 2 **characterized in that** the spring-loaded linkage comprises a circular or torsion spring (*G*) placed between the housing (*A)* and the parallel arms (*B)*.

4. A rope holder apparatus according to any preceding claims **characterized in that** the toothed plate (C) comprises an independent piece of teeth (C1) fixable to the plate (C) through a fitting system, (C2) screws or a combination of both.

5. A rope holder apparatus according to claim 4 **characterized in that** the teeth (C1) are made of plastic.

6. A rope holder apparatus according to any preceding claims **characterized in that** the apparatus include a system of slots (*A3*) through which straps (*F)* are insertable and keep the apparatus fixable at the height of the climber's chest.

## Patentansprüche

1. Seilhaltevorrichtung, Folgendes umfassend:
- ein Gehäuse (A), das eine zu seiner Hauptachse parallele Öffnung aufweist, wobei die Öffnung einen Schlitz definiert, der ein konkaves Profil (A1) aufweist, das konfiguriert ist, um ein Seil aufzunehmen, und wobei das Gehäuse einen hohlen Innenabschnitt beinhaltet
- eine federbelastete Verbindungsbaugruppe, die mit einer gezahnten Platte (C) versehen ist, wobei sowohl die gezahnte Platte (C) als auch die federbelastete Verbindungsbaugruppe innerhalb des hohlen Innenabschnitts des Gehäuses angeordnet sind und die gezahnte Platte (C) durch die federbelastete Verbindungsbaugruppe schwenkbar an dem Gehäuse angebracht ist,
wobei die Vorrichtung somit angepasst ist, um das Seil (E), das in der axialen Richtung des Seils innerhalb des Schlitzes des Gehäuses ausgerichtet ist und durch die Wirkung der gezahnten Platte, die eine Klemmkraft auf das Seil ausübt, festgehalten wird, zu halten, derart, dass der von der Vorrichtung ausgeübte Druck umso größer ist, je mehr Zugkraft oder Gewicht zu halten ist, die federbelastete Verbindungsbaugruppe ein Mechanismus aus parallelen drehenden Arme (B) ist, die die gezahnte Platte (C) ohne Drehung parallel zu dem Schlitz verschieben, wobei die parallelen drehenden Arme (B) durch Achsen (*B1*) an dem Gehäuse (A) an einem Ende und an einer gezahnten Platte (C) an dem anderen Ende befestigt sind, wobei die federbelastete Verbindungsbaugruppe eine normalerweise ausgefahrene Feder (D) umfasst, die zwischen der gezahnten Platte (C) und dem Gehäuse (*A*) angeordnet ist, *wobei* diese Feder (*D*) konfiguriert ist, um eine Vorspannkraft auf die parallelen drehenden Arme (*B*) auszuüben, um die gezahnte Platte (*C*) in Richtung des durch das konkave Profil (*A1*) definierten Schlitzes vorzuspannen.

2. Seilhaltevorrichtung gemäß Anspruch 1, **dadurch gekennzeichnet, dass** die parallel drehenden Arme (B) Viergelenkverbindungen sind.

3. Seilhaltevorrichtung gemäß Anspruch 1 oder 2, **dadurch gekennzeichnet, dass** die federbelastete Verbindung eine Kreis- oder Torsionsfeder (G) umfasst, die zwischen dem Gehäuse (*A*) und den parallelen Armen (*B*) angeordnet ist.

4. Seilhaltevorrichtung gemäß einem der vorhergehenden Ansprüche, **dadurch gekennzeichnet, dass** die gezahnte Platte (C) ein unabhängiges Zahnstück (C1) umfasst, das an der Platte (C) durch ein Passsystem, Schrauben (C2) oder eine Kombination aus beidem fixierbar ist.

5. Seilhaltevorrichtung gemäß Anspruch 4, **dadurch gekennzeichnet, dass** die Zähne (C1) aus Kunststoff hergestellt sind.

6. Seilhaltevorrichtung gemäß einem der vorhergehenden Ansprüche, **dadurch gekennzeichnet, dass** die Vorrichtung ein System aus Schlitzen (*A3*) beinhaltet, durch die Gurte (*F*) einführbar sind und die Vorrichtung auf der Höhe der Brust des Kletterers fixierbar halten.

## Revendications

1. Un appareil de support de corde comprenant :
- un boîtier (A) qui a une ouverture parallèle à son axe majeur, ladite ouverture définissant une fente ayant un profil concave (A1) configurée pour recevoir une corde et dans lequel le boîtier comprend une partie intérieure creuse
- un ensemble de liaison à ressort pourvu d'une plaque dentée (C), dans lequel la plaque dentée (C) et l'ensemble de liaison à ressort sont à la fois disposés à l'intérieur de la partie intérieure creuse du boîtier et la plaque dentée (C) est fixée de manière pivotante au boîtier par l'ensemble de liaison à ressort,
dans lequel l'appareil est ainsi adapté pour maintenir le câble (E) orienté dans la direction axiale du câble à l'intérieur de la fente du boîtier et maintenu en place par l'action de la plaque dentée appliquant une force de serrage à la corde, de sorte que, plus il y a de traction ou de poids à supporter, plus la pression exercée par l'appareil est grande, l'ensemble de liaison à ressort est un mécanisme de bras rotatifs parallèles (B) qui déplacent la plaque dentée (C) parallèlement à la fente sans rotation, dans lequel les bras rotatifs parallèles (B) sont fixés par des axes (*B1*) au boîtier (A) à une extrémité et à une plaque dentée (C) à l'autre extrémité, l'ensemble de liaison à ressort comprend un ressort normalement étendu (D) situé entre la plaque dentée (C) et le boîtier (*A*) *dans lequel* ce ressort (*D*) est configuré pour transmettre une force de sollicitation sur les bras rotatifs parallèles (*B*) de manière à solliciter la plaque dentée (*C*) vers la fente définie par le profil concave (*A1*).

2. Appareil de support de corde selon la revendication 1, **caractérisé en ce que** les bras rotatifs parallèles (B) sont une liaison à quatre barres.

3. Appareil de support de corde selon la revendication 1 ou 2, **caractérisé en ce que** la liaison à ressort comprend un ressort circulaire ou de torsion (G) placé entre le boîtier (*A*) et les bras parallèles (*B*).

4. Appareil de support de corde selon l'une quelconque des revendications précédentes, **caractérisé en ce que** la plaque dentée (C) comprend une pièce de dents indépendante (C1) pouvant être fixée à la plaque (C) par l'intermédiaire d'un système de fixation, (C2) vis ou une combinaison des deux.

5. Appareil de support de corde selon la revendication 4, **caractérisé en ce que** les dents (C1) sont en plastique.

6. Appareil de support de corde selon l'une quelconque des revendications précédentes, **caractérisé en ce que** l'appareil comprend un système de fentes (A3) à travers lesquelles des sangles (*F*) peuvent être insérées et maintiennent l'appareil fixable à la hauteur de la poitrine du grimpeur.
